(19) Europäisches Patentamt / European Patent Office / Office européen des brevets

(11) **EP 4 250 415 A1**

(12) **EUROPEAN PATENT APPLICATION**

(43) Date of publication:
**27.09.2023 Bulletin 2023/39**

(21) Application number: **23163199.5**

(22) Date of filing: **21.03.2023**

(51) International Patent Classification (IPC):
**H01M 10/04** (2006.01)     **H01M 50/533** (2021.01)

(52) Cooperative Patent Classification (CPC):
**H01M 10/0413; H01M 50/533**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.03.2022 KR 20220036950**

(71) Applicant: **SK On Co., Ltd.**
**Seoul 03161 (KR)**

(72) Inventors:
• **PARK, Sun Min**
**3412 Daejeon (KR)**

• **KIM, Dong Ju**
**3412 Daejeon (KR)**
• **KIM, Sang Mo**
**3412 Daejeon (KR)**
• **KIM, Young Suk**
**3412 Daejeon (KR)**
• **BYUN, Jae Gyu**
**3412 Daejeon (KR)**
• **JEONG, Taek Eon**
**3412 Daejeon (KR)**

(74) Representative: **Bird & Bird LLP**
**Maximiliansplatz 22**
**80333 München (DE)**

(54) **ELECTRODE PLATE, ELECTRODE ASSEMBLY AND SECONDARY BATTERY INCLUDING THE SAME**

(57)     According to the present disclosure, there are provided an electrode plate including an active material portion in which an active material is formed on a substrate and a non-coated portion in which the active material is not formed, wherein the non-coated portion includes a first non-coated portion in which a non-coated portion tab is formed and a second non-coated portion extending from the first non-coated portion in a width direction of the active material portion, and an area of the first non-coated portion and an area of the second non-coated portion satisfy Expression 1 (described in the detailed description), and an electrode assembly and a secondary battery including the same.

FIG. 2

**Description**

**BACKGROUND**

**1. Technical Field**

The present disclosure relates to an electrode plate having an improved structure of a non-coated portion, and an electrode assembly and a secondary battery including the same.

**2. Related Art**

With development of the electronics, communications, and space industries, demand for secondary batteries as an energy power source is rapidly increasing. In particular, as importance of global eco-friendly policies is emphasized, the electric vehicle market is growing rapidly, and research and development on secondary batteries is actively carried out at home and abroad.

Generally, a secondary battery is a battery that can be charged and discharged, unlike a primary battery that cannot be charged. The secondary battery may be used in the form of a single battery depending on the type of external device, or may be used in the form of a battery module in which a plurality of batteries are connected and bundled into one unit. The secondary battery includes an electrode assembly, and the electrode assembly includes a sequentially stacked structure with a separator interposed between electrode plates.

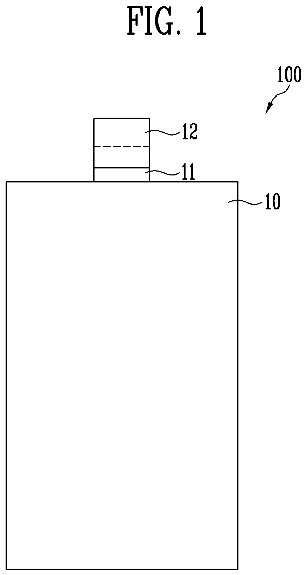

FIG. 1 schematically illustrates a form of an electrode plate according to a related art.

Referring to FIG. 1, an electrode plate 100 has a structure including an active material portion 10 formed on a substrate, a non-coated portion 11 in which the active material is not formed, and an electrode tab 12 formed on the non-coated portion 11.

In general, the non-coated portion 11 is used as an electrode tab by a notching process, or is manufactured in a form in which a separate electrode tab 12 can be disposed on the non-coated portion 11.

However, in the non-coated portion 11 where the active material is not formed, voltage and current increase at the non-coated portion 11 or the electrode tap 12 due to spreading & constriction resistance generated by current flow being bent, and heat generation is likely to occur. As such, there is an issue in that charging and discharging efficiency of a battery is reduced due to the increased resistance, and the life of the battery is reduced by heat generation, thereby reducing quality and stability of the battery.

Therefore, there is a need for a technique that can reduce the resistance of the electrode by improving the flow of current in the non-coated portion.

**SUMMARY**

Embodiments provide an electrode plate capable of reducing resistance of an electrode by improving structure of a non-coated portion, and an electrode assembly and a secondary battery including the same.

In accordance with an aspect of the present disclosure, there is provided an electrode plate including an active material portion in which an active material is formed on a substrate and a non-coated portion in which the active material is not formed, wherein the non-coated portion includes a first non-coated portion in which a non-coated portion tab is formed and a second non-coated portion extending from the first non-coated portion in a width direction of the active material portion, and an area of the first non-coated portion and an area of the second non-coated portion may satisfy Expression 1 below.

$$\text{(Expression 1)}$$

$$1.0 < (A+B)/A < 2.0$$

In Expression 1, A represents the area of the first non-coated portion (mm2), and B represents the area of the second non-coated portion (mm2).

According to an embodiment, the area of the first non-coated portion and the area of the second non-coated portion may satisfy the following Expression 2.

(Expression 2)

$$1.2 \leq (A+B)/A \leq 1.8$$

In Expression 2, A and B are as defined in Expression 1 above.

According to an embodiment, the non-coated portion tab may form an electrode tab of the electrode plate.

According to an embodiment, the non-coated portion may include a first region in contact with the active material portion and a second region spaced apart from the first region in a longitudinal direction of the active material portion.

According to an embodiment, the second non-coated portion may include a straight line shape connecting the first region and the second region.

According to an embodiment, the first region may be formed to have a longer length than the second region.

According to an embodiment, a width length of the second non-coated portion may get smaller from the first region to the second region.

According to an embodiment, the second non-coated portion may include a polygonal shape.

According to an embodiment, the second non-coated portion may include a round shape connecting the first region and the second region.

According to an embodiment, the round shape may be a convexly protruding shape.

According to an embodiment, the round shape may be a concavely indented shape.

According to an embodiment, a width length of the first non-coated portion and a width length of the active material portion may have a ratio of 1:1 to 1:4.

According to an embodiment, a width length of the first non-coated portion and a width length of the active material portion may have a ratio of 1:1 to 1:2.

An electrode assembly according to the present disclosure includes a cathode, an anode, and a separator interposed between the cathode and the anode, wherein the cathode or the anode includes the electrode plate according to the present disclosure.

A secondary battery according to the present disclosure includes the electrode assembly according to the present disclosure.

The present disclosure has an effect of lowering the spreading & constriction resistance generated when the flow of current in the non-coated portion is bent by adjusting the areas of the first and second non-coated portions to satisfy particular expressions regarding the area of the first non-coated portion in which the non-coated portion tab is formed and the area of the second non-coated portion extending from the non-coated portion.

In addition, the present disclosure has an effect of improving the flow of current due to the lowered resistance, thereby reducing voltage density and current density applied to the non-coated portion tap.

In addition, the present disclosure has an effect of reducing heat generated during charging and discharging of a battery, thereby reducing a side reaction of the battery generated by the heat generation, and increasing the life of the battery.

## BRIEF DESCRIPTION OF THE DRAWINGS

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey the scope of the example embodiments to those skilled in the art.

In the drawing figures, dimensions may be exaggerated for clarity of illustration. It will be understood that when an element is referred to as being "between" two elements, it can be the only element between the two elements, or one or more intervening elements may also be present. Like reference numerals refer to like elements throughout.

FIG. 1 schematically illustrates a form of an electrode plate according to a related art.

FIG. 2 schematically illustrates a form of an electrode plate in accordance with an embodiment of the present disclosure.

FIGS. 3 and 4 schematically illustrate a form of a non-coated portion in which a first region and a second region are shown in accordance with an embodiment of the present disclosure.

FIG. 5 schematically illustrates a form of a non-coated portion including a round shape in accordance with an embodiment of the present disclosure.

FIG. 6 schematically illustrates forms of a first non-coated portion with different width lengths in accordance with an embodiment of the present disclosure.

FIGS. 7 and 8 schematically illustrate forms of various non-coated portions in accordance with an embodiment of the present disclosure.

## DETAILED DESCRIPTION

The specific structural or functional description disclosed herein is merely illustrative for the purpose of describing embodiments according to the concept of the present disclosure. Further, the embodiments according to the concept of the present disclosure can be implemented in various forms in addition to the embodiments disclosed herein. Furthermore, the embodiments cannot be construed as limited to the embodiments set forth herein.

Hereinafter, the present disclosure will be described in detail.

The present disclosure relates to an electrode plate including an active material portion in which an active material is formed on a substrate and a non-coated portion in which the active material is not formed, wherein the non-coated portion includes a first non-coated portion in which a non-coated portion tab is formed and a second non-coated portion extending in a width direction of the active material portion from the first non-coated portion, and an area of the first non-coated portion and an area of the second non-coated portion may satisfy Expression 1 below.

$$\text{(Expression 1)}$$

$$1.0 < (A+B)/A < 2.0$$

In Expression 1, A represents the area of the first non-coated portion ($mm^2$), and B represents the area of the second non-coated portion ($mm^2$).

The active material portion has preferably a width and a length, wherein the non-coated portion extend from the width of the active material portion. Preferably, the non-coated first portion and/or the non-coated second portion(s) are in contact with the active material portion.

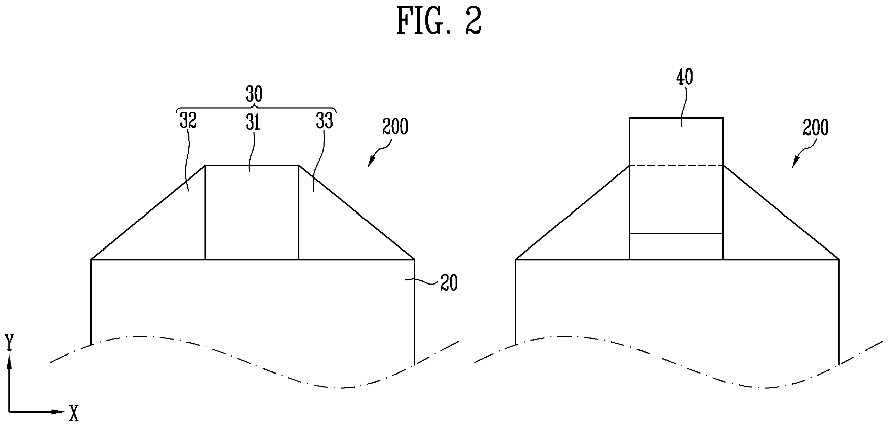

FIG. 2 schematically illustrates a form of an electrode plate in accordance with an embodiment of the present disclosure.

Referring to FIG. 2, an electrode plate 200 includes an active material portion 20 in which an active material is formed on a substrate and a non-coated portion 30 in which the active material is not formed, and the non-coated portion 30 includes a first non-coated portion 31 in which a non-coated portion tab is formed.

The electrode plate 200 may be a cathode plate or an anode plate for a secondary battery. The substrate may be a current collector, and the current collector may include a known conductive material in the range of not causing a chemical reaction in the secondary battery. For example, the current collector may include any one or more selected from the group consisting of stainless steel, nickel (Ni), aluminum (Al), titanium (Ti), copper (Cu), and alloys thereof, and may be provided in various forms such as film, sheet or foil.

The active material portion 20 includes the active material, and when the electrode plate 200 is used as the cathode plate, the active material portion 20 may include a cathode active material. The cathode active material may be a material in which lithium (Li) ions can be inserted and extracted. The cathode active material may be lithium metal oxide. For example, the cathode active material may be any one or more selected from the group consisting of lithium manganese oxide, lithium nickel oxide, lithium cobalt oxide, lithium nickel manganese oxide, lithium nickel cobalt manganese oxide, lithium nickel cobalt aluminum oxide, lithium iron phosphate compound, lithium phosphate manganese compound, lithium phosphate cobalt compound, and lithium phosphate vanadium compound, but is not necessarily limited to a particular example.

When the electrode plate 200 is used as the anode plate, the active material portion 20 may include an anode active material. The anode active material may be a material in which lithium ions can be stored and extracted. For example, the anode active material may be any one or more selected from the group consisting of carbon-based materials such as crystalline carbon, amorphous carbon, carbon composites, carbon fibers, and the like, lithium alloys, silicon (Si), and tin (Sn). According to an embodiment, the anode active material may be natural graphite or artificial graphite, but is not limited to a particular example.

In addition, the active material portion 20 may further include a binder and a conductive material. The binder may mediate bond between the substrate and the active material to improve mechanical stability. For example, the binder may be an organic binder or a water-based binder, and may be used with a thickener such as carboxymethyl cellulose (CMC). More specifically, the organic binder may be any one or more selected from the group consisting of vinylidene fluoridehexafluoropropylene copolymer (PVDF-co-HFP), polyvinylidene fluoride (PVDF), polyacrylonitrile, and polymethylmethacrylate. The water-based binder may be styrene-butadiene rubber (SBR), but is not limited to a particular example.

The conductive material may improve electrical conductivity of the secondary battery. The conductive material may include a metal-based material. For example, the conductive material may include a typical carbon based conductive material. More specifically, the conductive material may include one or more selected from the group consisting of graphite, carbon black, graphene, and carbon nanotubes. Preferably, the conductive material may include carbon nanotubes, but is not limited to a particular example.

In the first non-coated portion 31, a non-coated portion tab is formed. The non-coated portion tab may be used as an electrode tap of the electrode plate 200. The non-coated portion tab may be used as a cathode tab or an anode tab according to the use of the electrode plate 200. In addition, a separate electrode tab 40 may be attached onto the first non-coated portion 31 as needed. The electrode tab 40 may be attached to the first non-coated portion 31 by a method such as ultrasonic welding, laser welding, or resistance welding, but is not limited to a particular method. More specifically, the first non-coated portion 31 may represent a form divided by a boundary region with the active material portion 20 and boundary regions with second non-coated portions 32 and 33. Alternatively, the first non-coated portion 31 may represent a form divided by a boundary region with the active material portion 20 and boundary regions with the second non-coated portions 32 and 33 while the electrode tab 40 is attached.

The non-coated portion 30 may include the second non-coated portions 32 and 33 extending from the first non-coated portion 31 in a width direction X of the active material portion 20. The second non-coated portions 32 and 33 may be formed on both sides of the first non-coated portion 31. The non-coated portion according to the related art may have a rectangular shape and be used as an electrode tab or may have an electrode tab attached thereto, but the non-coated portion 30 of the present disclosure includes not only the first non-coated portion 31 which may be used as an electrode tab or to which an electrode tab may be attached, but also the second non-coated portions 32 and 33, thereby increasing the width of the non-coated portion to reduce the spreading & constriction resistance when the flow of current in the non-coated portion is bent.

An area of the first non-coated portion 31 and an area of the second non-coated portions 32 and 33 may satisfy Expression 1 below.

$$(\text{Expression 1})$$

$$1.0 < (A+B)/A < 2.0$$

In Expression 1, A represents the area (mm2) of the first non-coated portion 31, and B represents the area (mm2) of the second non-coated portions 32 and 33.

Here, the area of the second non-coated portions 32 and 33 indicates the sum of an area of the second non-coated portion 32 formed on one side of the first non-coated portion 31 and an area of the second non-coated portion 33 formed on the other side of the first non-coated portion 31. The area of the first non-coated portion 31 and the second non-coated portions 32 and 33 refers to the surface area of the first non-coated portion 31 and the second non-coated portions 32 and 33.

In Expression 1, when (A+B)/A is 1.0 or less, it may be understood that the non-coated portion 30 does not include the second non-coated portions 32 and 33, and in this case, voltage and current increase at the electrode tab and a problem of heat generation may occur due to the spreading & constriction resistance that occurs when the flow of current is bent. In addition, the charging and discharging efficiency of the battery is reduced due to the increased resistance, and the life of the battery is reduced by the heat generation, and a problem may occur in which the quality and stability of the battery are reduced.

In Expression 1, when (A+B)/A is 2.0 or more, the voltage and current increase at the electrode tab, the heat generation occurs, and a problem may occur in which the charging and discharging efficiency of the battery is reduced.

Preferably, the area of the first non-coated portion 31 and the area of the second non-coated portions 32 and 33 may satisfy Expression 2 below.

$$(\text{Expression 2})$$

$$1.2 \leq (A+B)/A \leq 1.8$$

In Expression 2, A and B are as defined in Expression 1 above.

In Expression 2, when (A+B)/A satisfies 1.2 to 1.8, the spreading & constriction resistance generated when the flow of current in the non-coated portion is bent is reduced, thereby improving the quality and stability of the battery.

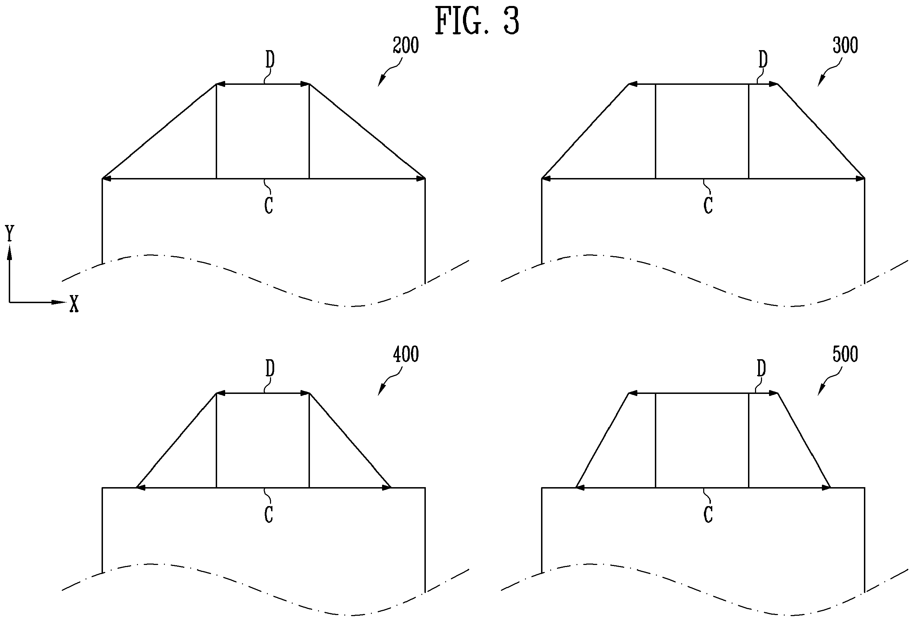

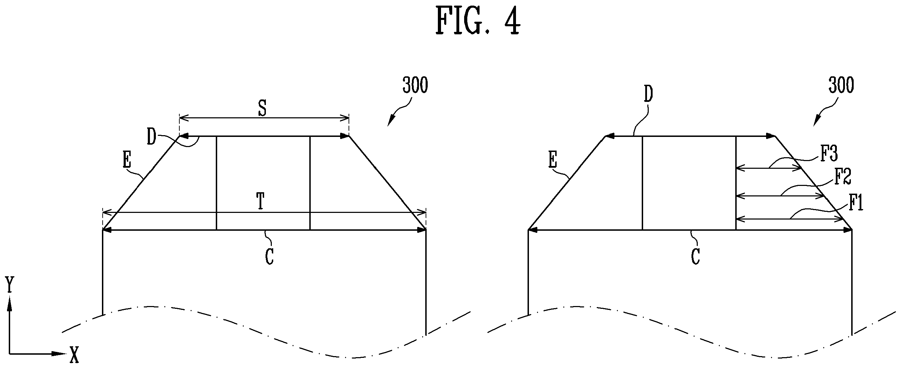

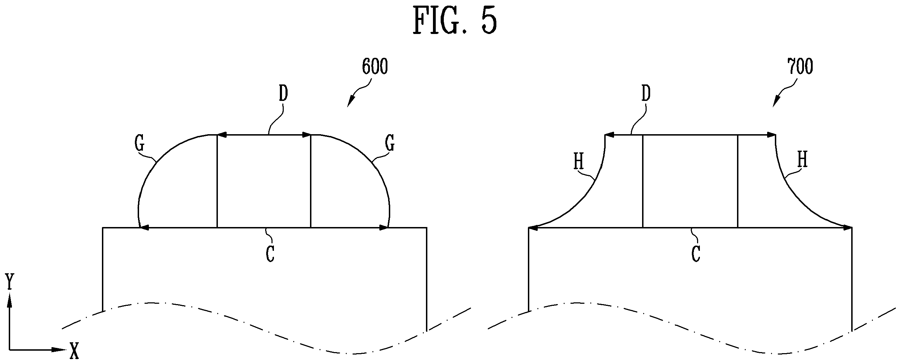

FIGS. 3 to 5 schematically illustrate forms of a non-coated portion in which a first region and a second region are shown according to an embodiment of the present disclosure.

Referring to FIGS. 2 to 5, electrode plates 200, 300, 400, and 500 may include various types of non-coated portions. The non-coated portion 30 may include a first region C in contact with the active material portion 20 and a second region D spaced apart from the first region C in a longitudinal direction Y of the active material portion 20. A length T of the first region may be formed to be the same as or smaller than a width length of the active material portion 20. A length S of the second region may be formed to be the same as or longer than a width length of the first non-coated portion 31.

The second non-coated portions 32 and 33 may include a straight line shape E in which the first region C and the second region D are connected. More specifically, the second non-coated portions 32 and 33 may represent a form divided by the first region C, the second region D, a boundary region with the first non-coated portion, and the straight line shape E.

The length T of the first region may be formed longer than the length S of the second region. Width lengths F1, F2, and F3 of the second non-coated portions 32 and 33 may get smaller from the first region C to the second region D.

The non-coated portions 32 and 33 may include polygonal shapes. More specifically, each of the second non-coated portions 32 and 33 may include a triangle or trapezoidal shape in which the width lengths F1, F2, and F3 gradually narrow in a direction from the first region C to the second region D.

Each of the second non-coated portions 32 and 33 may include a round shape in which the first region C and the second region D are connected. The round shape may be a convexly protruding shape G and may be a concavely indented shape H.

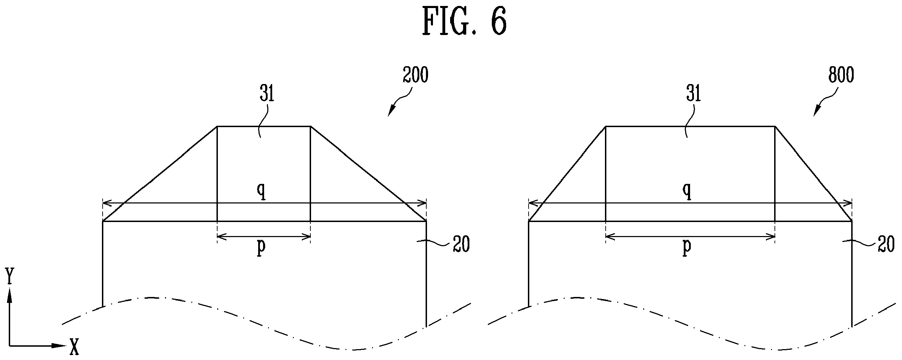

FIG. 6 schematically illustrates forms of a first non-coated portion with different width lengths in accordance with an embodiment of the present disclosure.

Referring to FIGS. 2 and 6, a width length p of the first non-coated portion 31 and a width length q of the active material portion 20 may be adjusted. If the width length p of the first non-coated portion 31 is increased compared to the width length q of the active material portion 20, it may mean that the area of the first non-coated portion 31 which may be used as the cathode tab or the anode tab of the electrode plates 200 and 800 or to which the electrode tab may be attached increases. In addition, it may mean that the area of the second non-coated portions 32 and 33 is reduced compared to the area of the first non-coated portion 31 in the non-coated portion 30. Conversely, if the width length p of the first non-coated portion 31 is reduced compared to the width length q of the active material portion 20, it may mean that the area of the first non-coated portion 31 which may be used as the cathode tab or the anode tab of the electrode plates 200 and 800 or to which the electrode tab may be attached is reduced. In addition, it may mean that the area of the second non-coated portions 32 and 33 is increased compared to the area of the first non-coated portion 31 in the non-coated portion 30.

The width length p of the first non-coated portion 31 and the width length q of the active material portion 20 may have a ratio of 1:1 to 1:4. Preferably, the width length p of the first non-coated portion 31 and the width length q of the active material portion 20 may have a ratio of 1:1 to 1:2. When the range is satisfied, the flow of current is improved to reduce the voltage density and current density applied to the non-coated portion tap.

An electrode assembly of the present disclosure includes a cathode, an anode, and a separator interposed between the cathode and the anode, and the cathode or the anode includes the electrode plate according to the present disclosure.

The separator is configured to prevent electrical short between the cathode and the anode and to generate flow of ions. The separator may include a porous polymer film or a porous nonwoven fabric. Here, the porous polymer film may consist of a single layer or multiple layers, including polyolefin-based polymers such as ethylene polymers, propylene polymers, ethylene/butene copolymers, ethylene/hexene copolymers, and ethylene/methacrylate copolymers. The porous nonwoven fabric may include one or more selected from the group consisting of glass fibers of high melting point and polyethylene terephthalate fibers. However, according to an embodiment, the separator may be a highly heat-resistant ceramic coated separator (CCS), but is not limited thereto.

The electrode assembly may be contained in a case with an electrolyte. The electrolyte may be a non-aqueous electrolyte. The electrolyte may include lithium salts and organic solvents. The organic solvent may include one or more selected from the group consisting of propylene carbonate (PC), ethylene carbonate (EC), diethyl carbonate (DEC), dimethyl carbonate (DMC), ethyl methyl carbonate (EMC), methylpropyl carbonate (MPC), dipropyl carbonate (DPC), vinylene carbonate (VC), dimethyl sulfoxide, acetonitrile, dimethoxyethane, diethoxyethane, sulfolane, gamma-butyrolactone, propylene sulfide, and tetrahydrofuran.

A secondary battery of the present disclosure includes the electrode assembly according to the present disclosure. The secondary battery may further include a battery container for accommodating the electrode assembly and a sealing member for sealing the battery container. In addition, a battery module or battery pack including the secondary battery as a unit cell may be used as a power source for any one or more of a power tool, an electric vehicle, a hybrid electric vehicle, a plugin hybrid electric vehicle, or a power storage system.

Hereinafter, examples of the present disclosure will be described in detail so that those skilled in the art to which the present disclosure pertains can easily implement it. However, the present disclosure may be implemented in various different forms and is not limited to examples described herein.

Examples

Preparation Examples 1 to 14: Preparation of cathode for secondary battery

A cathode mixture slurry was prepared by adding 94 wt% of LiNi0.80Co0.10Mn0.10O2 as a cathode active material, 3 wt% of carbon black as a conductive agent, and 3 wt% of PVdF as a binder to N-methyl-2 pyrrolidone (NMP) as a solvent. Thereafter, the anode mixture slurry was coated with a thickness of 20 $\mu$m on an aluminum (Al) thin film that is a cathode current collector, and dried, and then roll press was performed to prepare an active material portion. Thereafter, a cathode was prepared by punching a non-coated portion on which the cathode mixture slurry was not coated into various shapes by a notching process.

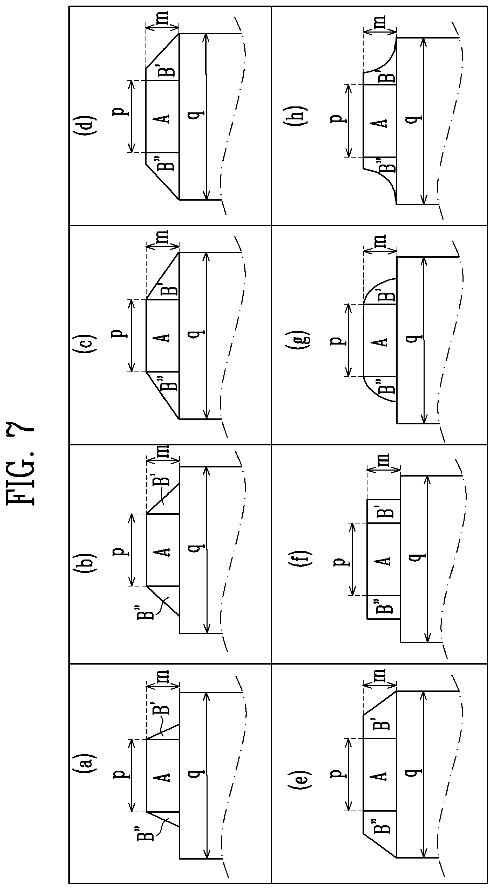

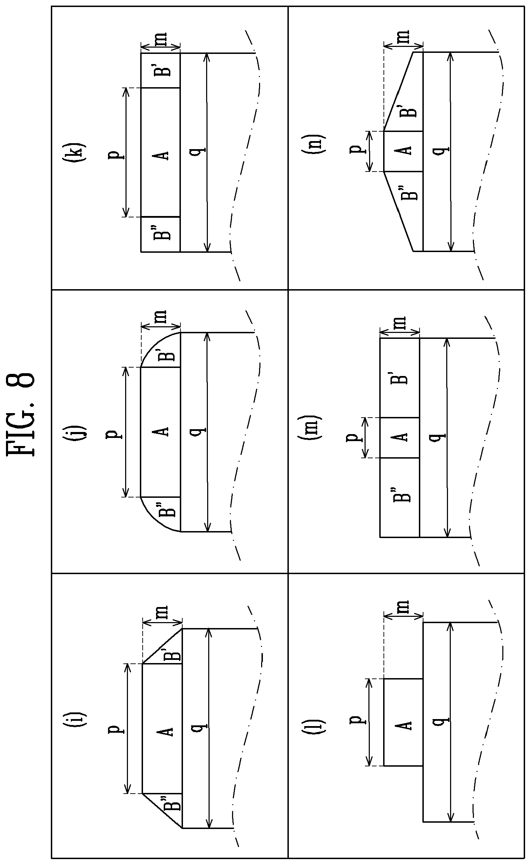

At this time, shapes of the prepared non-coated portion are shown in FIGS. 7 and 8, and the width length p and an area A of the first non-coated portion in which an electrode tab is formed, and areas B' and B" of the second non-coated portions extending from the first non-coated portion are measured and shown in Table 1 below.

In addition, based on the measurement results, a ratio of the total area of the first and second non-coated portions to the area of the first non-coated portion, ((A+B)/A) was calculated, and the ratio of the width length p of the first non-coated portion to the width length q of the active material portion, (p:q) was calculated and shown in Table 1 below.

On the other hand, a height m of the non-coated portion was fixed to 12 mm and the width q of the active material portion was fixed to 93 mm.

TABLE 1

| | Shape of non-coated portion | A(mm$^2$) | B'+B" (mm$^2$) | (A+B[1])/A | p(mm) | p:q |
|---|---|---|---|---|---|---|
| Preparation Example 1 | FIG. 7(a) | 540.0 | 108.0 | 1.20 | 45.0 | 1:2.07 |
| Preparation Example 2 | FIG. 7(b) | 540.0 | 216.0 | 1.40 | 45.0 | 1:2.07 |
| Preparation Example 3 | FIG. 7(c) | 540.0 | 288.0 | 1.53 | 45.0 | 1:2.07 |
| Preparation Example 4 | FIG. 7(d) | 540.0 | 324.0 | 1.60 | 45.0 | 1:2.07 |
| Preparation Example 5 | FIG. 7(e) | 540.0 | 432.0 | 1.80 | 45.0 | 1:2.07 |
| Preparation Example 6 | FIG. 7(f) | 540.0 | 288.0 | 1.53 | 45.0 | 1:2.07 |
| Preparation Example 7 | FIG. 7(g) | 540.0 | 287.8 | 1.53 | 45.0 | 1:2.07 |
| Preparation Example 8 | FIG. 7(h) | 540.0 | 288.2 | 1.53 | 45.0 | 1:2.07 |
| Preparation Example 9 | FIG. 8(i) | 600.0 | 258.0 | 1.43 | 50.0 | 1:1.86 |
| Preparation Example 10 | FIG. 8(j) | 600.0 | 405.1 | 1.68 | 50.0 | 1:1.86 |
| Preparation Example 11 | FIG. 8(k) | 600.0 | 516.0 | 1.86 | 50.0 | 1:1.86 |
| Preparation Example 12 | FIG. 8(l) | 540.0 | - | 1.00 | 45.0 | 1:2.07 |
| Preparation Example 13 | FIG. 8(m) | 480.0 | 636.0 | 2.33 | 40.0 | 1:2.33 |
| Preparation Example 14 | FIG. 8(n) | 480.0 | 516.8 | 2.08 | 40.0 | 1:2.33 |
| 1) B: Area of the second non-coated portion (B'+B") | | | | | | |

Examples 1 to 11 and Comparative Examples 1 to 3: Preparation of secondary battery

An anode mixture slurry was prepared by adding 96 wt% of natural graphite as an anode active material, 1 wt% of Denka black as a conductive agent, 2 wt% of SBR as a binder, and 1 wt% of CMC as a thickener to water. Thereafter, the anode mixture slurry was coated with a thickness of 100 $\mu$m on a copper (Cu) thin film that is an anode current collector and dried, and then a roll press was performed to prepare an anode.

After disposing a porous film formed of polyethylene having a thickness of 17 $\mu$m between the cathode prepared in each of Preparation Examples 1 to 14 and the prepared anode, secondary batteries of Examples 1 to 11 and Comparative Examples 1 to 3 were prepared by injecting an electrolyte in which 1M LiPF6 was dissolved in a solvent in which ethylene carbonate (EC) and diethyl carbonate (DEC) were mixed in a volume ratio of 30:70.

Experimental Example - Evaluation of Resistance Characteristics

The secondary batteries prepared in Examples 1 to 11 and Comparative Examples 1 to 3 was charged/discharged three times at a current of 0.33C from 2.5V to 4.2V. After that, charging was carried out to 4.2V and 50% of the last third discharge capacity was discharged. Thereafter, after a onehour pause, a current of 2.5C was applied and the resistance was calculated based on the reduced voltage and shown in Table 2 below.

TABLE 2

| | Cathode | Resistance (mohm) | | |
|---|---|---|---|---|
| | | 0.1s | 1s | 10s |
| Example 1 | Preparation Example 1 | 0.7564 | 0.7615 | 0.7657 |
| Example 2 | Preparation Example 2 | 0.7540 | 0.7590 | 0.7633 |
| Example 3 | Preparation Example 3 | 0.7524 | 0.7575 | 0.7618 |
| Example 4 | Preparation Example 4 | 0.7526 | 0.7577 | 0.7620 |
| Example 5 | Preparation Example 5 | 0.7519 | 0.7569 | 0.7612 |
| Example 6 | Preparation Example 6 | 0.7532 | 0.7583 | 0.7625 |
| Example 7 | Preparation Example 7 | 0.7526 | 0.7577 | 0.7620 |
| Example 8 | Preparation Example 8 | 0.7531 | 0.7582 | 0.7624 |
| Example 9 | Preparation Example 9 | 0.7412 | 0.7472 | 0.7584 |
| Example 10 | Preparation Example 10 | 0.7408 | 0.7458 | 0.7573 |
| Example 11 | Preparation Example 11 | 0.7401 | 0.7448 | 0.7569 |
| Comparative Example 1 | Preparation Example 12 | 0.7638 | 0.7689 | 0.7732 |
| Comparative Example 2 | Preparation Example 13 | 0.7709 | 0.7752 | 0.7811 |
| Comparative Example 3 | Preparation Example 14 | 0.7712 | 0.7763 | 0.7822 |

According to Table 1 and Table 2, in the case of each of Examples 1 to 11 which includes the first non-coated portion in which the non-coated portion tab is formed and the second non-coated portions extending in the width direction of the active material portion from the first non-coated portion and in which the area A of the first non-coated portion and the area B of the second non-coated portions satisfy $1.0 < (A+B)/A < 2.0$, it was determined that the resistance value of the secondary battery was lowered compared to Comparative Examples 1 to 3.

Specifically, in the case of Comparative Example 1 which does not include the second non-coated portion extending in the width direction of the active material portion in the first non-coated portion, the resistance values of the secondary battery at 0.1s, 1s, and 10s were all increased compared to Examples 1 to 11.

In addition, in the case of each of Examples 2 and 3 in which the second non-coated portion extending in the width direction of the active material portion from the first non-coated portion is included but the area A of the first non-coated portion and the area B of the second non-coated portion do not satisfy $1.0 < (A+B)/A < 2.0$, it was determined that the resistance values of the secondary battery at 0.1s, 1s, and 10s were all increased compared to Examples 1 to 11.

On the other hand, in the case of each of Examples 9 to 11 in which the width length of the first non-coated portion is long, the resistance values of the secondary battery at 0.1s, 1s, and 10s were lowered compared to Examples 1 to 8. Thus, in the case that $1.0 < (A+B)/A < 2.0$ is satisfied and the width length of the first non-coated portion is long, it was determined that the effect of reducing the voltage density and the current density applied to the non-coated portion tap was more excellent because the current flow was improved.

In conclusion, in the case of each of Examples 1 to 11, the flow of current was improved due to the lowered resistance compared to Comparative Examples 1 to 3 thereby reducing the voltage density and current density applied to the non-coated portion tap and it was confirmed that side reactions of the battery caused by heat generated during charging and discharging of the battery were reduced and the life of the battery was increased.

While the present disclosure has been shown and described with reference to certain exemplary embodiments thereof, it will be understood by those skilled in the art that various changes in form and details may be made therein without departing from the spirit and scope of the present disclosure as defined by the appended claims and their equivalents. Therefore, the scope of the present disclosure should not be limited to the above-described exemplary embodiments but should be determined by not only the appended claims but also the equivalents thereof.

In the above-described embodiments, all steps may be selectively performed or part of the steps and may be omitted. In each embodiment, the steps are not necessarily performed in accordance with the described order and may be rearranged. The embodiments disclosed in this specification and drawings are only examples to facilitate an understanding of the present disclosure, and the present disclosure is not limited thereto. That is, it should be apparent to those skilled in the art that various modifications can be made on the basis of the technological scope of the present disclosure.

Meanwhile, the exemplary embodiments of the present disclosure have been described in the drawings and specification. Although specific terminologies are used here, those are only to explain the embodiments of the present disclosure. Therefore, the present disclosure is not restricted to the above-described embodiments and many variations are possible within the spirit and scope of the present disclosure. It should be apparent to those skilled in the art that various modifications can be made on the basis of the technological scope of the present disclosure in addition to the embodiments disclosed herein.

## Claims

1. An electrode plate comprising:

   an active material portion in which an active material is formed on a substrate; and
   a non-coated portion in which the active material is not formed,
   wherein the non-coated portion comprises a first non-coated portion in which a non-coated portion tab is formed and a second non-coated portion extending from the first non-coated portion in a width direction of the active material portion, and an area of the first non-coated portion and an area of the second non-coated portion satisfy Expression 1 below:

$$(\text{Expression 1})$$

$$1.0 < (A+B)/A < 2.0$$

   wherein, in Expression 1, A represents the area of the first non-coated portion ($mm^2$), and B represents the area of the second non-coated portion ($mm^2$).

2. The electrode plate of claim 1, wherein the area of the first non-coated portion and the area of the second non-coated portion satisfy Expression 2 below:

$$(\text{Expression 2})$$

$$1.2 \leq (A+B)/A \leq 1.8$$

   wherein, in Expression 2, A and B are as defined in Expression 1 above.

3. The electrode plate of any one of claims 1 or 2, wherein the non-coated portion tab forms an electrode tab of the electrode plate.

4. The electrode plate of any one of claims 1 to 3, wherein the non-coated portion comprises a first region in contact with the active material portion and a second region spaced apart from the first region in a longitudinal direction of the active material portion.

5. The electrode plate of claim 4, wherein the second non-coated portion comprises a straight line shape connecting the first region and the second region.

6. The electrode plate of any one of claims 4 or 5, wherein the first region is formed to have a longer length than the second region.

7. The electrode plate of any one of claims 4 to 6, wherein a width length of the second non-coated portion gets smaller from the first region to the second region.

8. The electrode plate of any one of claims 4 to 7, wherein the second non-coated portion comprises a polygonal shape.

9. The electrode plate of any one of claims 4 to 7, wherein the second non-coated portion comprises a round shape connecting the first region and the second region.

10. The electrode plate of claim 9, wherein the round shape is a convexly protruding shape.

11. The electrode plate of claim 9, wherein the round shape is a concavely indented shape.

12. The electrode plate of any one of claims 1 to 11, wherein a width length of the first non-coated portion and a width length of the active material portion have a ratio of 1:1 to 1:4.

13. The electrode plate of any one of claims 1 to 12, wherein a width length of the first non-coated portion and a width length of the active material portion have a ratio of 1:1 to 1:2.

14. An electrode assembly comprising:

a cathode;
an anode; and
a separator interposed between the cathode and the anode,
wherein the cathode or the anode comprises the electrode plate according to claim 1.

15. A secondary battery comprising the electrode assembly according to claim 14.

# FIG. 1

# FIG. 2

EP 4 250 415 A1

FIG. 3

EP 4 250 415 A1

# FIG. 4

# FIG. 5

EP 4 250 415 A1

# FIG. 6

# FIG. 7

EP 4 250 415 A1

# FIG. 8

EP 4 250 415 A1

Europäisches
Patentamt

European
Patent Office

Office européen
des brevets

# EUROPEAN SEARCH REPORT

Application Number

EP 23 16 3199

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 942 832 A1 (LG CHEMICAL LTD [KR]) 11 November 2015 (2015-11-11) * abstract * * figures 2, 4-6 * | 1-15 | INV. H01M10/04 H01M50/533 |
| X | EP 2 003 716 A1 (HITACHI VEHICLE ENERGY LTD [JP]) 17 December 2008 (2008-12-17) * abstract * * example 5; table 1 * * figure 6B * * figure 7A * | 1-15 | |
| X | US 2013/266845 A1 (KANDA YOSHIAKI [JP] ET AL) 10 October 2013 (2013-10-10) * abstract * * paragraph [0063] * * figure 2 * * figure 4 * | 1-15 | |
| A | US 2012/177981 A1 (KIM CHAN-SEOK [KR]) 12 July 2012 (2012-07-12) * abstract * | 1-15 | TECHNICAL FIELDS SEARCHED (IPC) H01M |

The present search report has been drawn up for all claims

| Place of search | Date of completion of the search | Examiner |
|---|---|---|
| The Hague | 15 August 2023 | Rosciano, Fabio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 3199

This annex lists the patent family members relating to the patent documents cited in the above-mentioned European search report.
The members are as contained in the European Patent Office EDP file on
The European Patent Office is in no way liable for these particulars which are merely given for the purpose of information.

15-08-2023

| Patent document cited in search report | | Publication date | Patent family member(s) | | Publication date |
|---|---|---|---|---|---|
| EP 2942832 | A1 | 11-11-2015 | EP | 2942832 A1 | 11-11-2015 |
| | | | KR | 20150089915 A | 05-08-2015 |
| | | | US | 2015372335 A1 | 24-12-2015 |
| | | | WO | 2015115731 A1 | 06-08-2015 |
| EP 2003716 | A1 | 17-12-2008 | CN | 101325248 A | 17-12-2008 |
| | | | EP | 2003716 A1 | 17-12-2008 |
| | | | JP | 4444989 B2 | 31-03-2010 |
| | | | JP | 2008305731 A | 18-12-2008 |
| | | | US | 2008305393 A1 | 11-12-2008 |
| US 2013266845 | A1 | 10-10-2013 | CN | 103367695 A | 23-10-2013 |
| | | | JP | 2013214464 A | 17-10-2013 |
| | | | US | 2013266845 A1 | 10-10-2013 |
| US 2012177981 | A1 | 12-07-2012 | CN | 102593500 A | 18-07-2012 |
| | | | KR | 20120081783 A | 20-07-2012 |
| | | | US | 2012177981 A1 | 12-07-2012 |

EPO FORM P0459

For more details about this annex : see Official Journal of the European Patent Office, No. 12/82